# EUROPÄISCHE PATENTANMELDUNG

(11) **EP 4 328 159 A1**
(43) Veröffentlichungstag der Anmeldung: **28.02.2024**
(21) Anmeldenummer: 23192412.7
(22) Anmeldetag: 21.08.2023
(51) Int. Cl.: B65G 43/08, B65G 47/52, B65G 47/96

(54) **FÖRDERANLAGE**

(30) Priorität: 25.08.2022 CH 9972022
(71) Anmelder: FERAG AG, 8340 Hinwil (CH)
(72) Erfinder: BRETZ, Markus, 8340 Hinwil (CH); FENILE, Roberto, 8340 Hinwil (CH)
(74) Vertreter: Frei Patent Attorneys

(57) **Zusammenfassung**

Die Erfindung betrifft eine Förderanlage (1) mit einer Zufördereinrichtung (10), einer Übemahmefördereinrichtung (30) und einer Steuerungseinrichtung (2) zum Übergeben von liegend geförderten Fördergütern (9) von der Zufördereinrichtung (10) an die Übemahmefördereinrichtung (30), wobei die Förderanlage (1) einen Transferbereich (TB) ausbildet, in welchem die Fördergüter (9) von der Zufördereinrichtung (10) an die Übernahmeiördereinrichtung (30) übergeben werden. Die Förderanlage (1) enthält eine Transfemnterstützungseinrichtung (70), welche dazu ausgelegt ist, im Transferbereich (TB) mittels Druckgas (72) von unten auf mindestens ein vorbei bewegtes Fördergut (9) einzuwirken.

## Beschreibung

Die Erfindung liegt auf dem Gebiet der Fördertechnik, insbesondere der Fördertechnik für Intralogistik. Die Erfindung betrifft eine Förderanlage mit einer Zufördereinrichtung, einer Übernahmefördereinrichtung und einer Steuerungseinrichtung zum Übergeben von liegend geförderten Fördergütern von der Zufördereinrichtung an die Übernahmefördereinrichtung, wobei die Förderanlage einen Transferbereich ausbildet, in welchem die Fördergüter von der Zufördereinrichtung an die Übernahmefördereinrichtung übergeben werden.

Durch den zunehmenden Online-Handel werden in Umschlagzentren immer grössere Mengen von Fördergütern von unterschiedlicher Beschaffenheit, wie Pakete oder Beutelware, verarbeitet. Unter Beutelware sind Waren, wie Textilien bzw. Kleider, zu verstehen, welche in Beuteln, insbesondere Plastikbeuteln, verpackt sind.

Die grossen Mengen an Fördergütern sowie deren unterschiedliche Beschaffenheit sind eine grosse Herausforderung für die Umschlagzentren. So sollen die Fördergüter in den Umschlagzentren möglichst speditiv und fehlerfrei verarbeitet werden, damit diese ihren Empfänger schnellstmöglich erreichen. Ferner soll die Verarbeitung der Fördergüter möglichst störungsfrei verlaufen damit es zu keinen Anlagenausfallzeiten kommt.

In den Umschlagzentren werden die eintreffenden Fördergüter in Sortier- und Verteilsysteme eingespiesen. Hierzu werden die eintreffenden Fördergüter in der Regel als Liegeware auf die Förderfläche einer Einschleusvorrichtung aufgelegt. Die Einschleusvorrichtung fördert die Fördergüter einem Sortierförderer, auch Sorter genannt, zu und übergibt sie diesem.

Förderanlagen mit einem Sortierförderer und einer dazugehörigen Einschleusvorrichtung sind zum Beispiel in den Publikationsschriften DE 103 46 122 A1, EP 3 284 705 A1, WO 2016/067163 A1 und WO 2021/113594 A1 offenbart.

Der Sorter kann beispielsweise als so genannter Kippschalenförderer ausgebildet sein, welcher zum Abgeben von Fördergütern kippbare Förderschalen aufweist. Mittels des Kippschalenförderers werden die Fördergüter in Kippschalen entlang einer Abgabezone an Abgabestellen vorbei gefördert. Sobald das Fördergut die richtige Abgabestelle erreicht hat, wird die Kippschale über einen Kippmechanismus in eine Schrägstellung versetzt und die Fördergüter gleiten an der betreffenden Abgabestelle seitlich von der Förderschale ab.

Alternativ können die Kippschalen bereits vor der Abgabezone gekippt werden, wobei die Abgabe des Fördergutes an der richtigen Abgabestelle durch Schwenken einer abgabeseitigen, tieferliegenden Seitenwand von einer Schliessstellung in eine Offenstellung erfolgt, z. B. mittels Hoch- oder Herunterklappen der Seitenwand.

Neben Paketen werden immer häufiger in Beuteln, wie Plastikbeuteln, verpackte Güter verarbeitet. Diese werden nachfolgend als Beutelware bezeichnet. Die in Beuteln verpackte Ware sind häufig Textilien, wie Kleider, oder Druckereiprodukte, wie Broschüren oder Zeitschriften. Entsprechend ist diese Beutelware flexibel und oftmals auch biegeschlaff. Insbesondere der aufstrebenden Online-Handel mit Kleidern führt zu einer Zunahme von Beutelware.

Die Verarbeitung von solcher Beutelware verursacht jedoch Schwierigkeiten, wie dies bei Paketen weniger oder gar nicht der Fall ist. So stellt beispielsweise die Haftung zwischen der Förderfläche und der Beutelware Probleme bei der Übergabe zwischen zwei Fördereinrichtungen dar. Die ausgeprägte Haftung bei Beutelware ist einerseits den flexiblen Eigenschaften der Beutelware geschuldet, welche dazu führen, dass sich die Beutelfläche der Förderfläche des Förderorgans anschmiegen kann, wodurch die Kontaktfläche zum Förderorgan vergrössert wird. Des Weiteren weisen die verschiedenen Verpackungsmaterialien auch unterschiedliche Hafteigenschaften auf. So neigen die Beutelhüllen aus Kunststoff zu einer besseren Haftung als zum Beispiel die Kartonverpackung von Paketen.

Ein weiterer Grund für ein unterschiedliches Verhalten der Fördergüter bei der Übergabe liegt auch in den flexiblen Eigenschaften der Beutelware gegenüber den formstabilen Pakten. Wird beispielsweise ein Paket von einem Zuförderer an einen Übernahmeförderer übergeben, so schiebt der Zuförderer das Paket auf den Übernahmeförderer bis das Paket den Kontakt zum Förderorgan des Zuförderers verliert. Dies auch dann, wenn das Paket mit einem vorderen Abschnitt bereits auf dem Förderorgan des Übernahmeförderers aufliegt und dem Transfer durch die auftretende Gleitreibung bremsend entgegenwirkt. Das formstabile Paket erhält also die zum Zurücklegen der Transferstrecke notwendige Bewegungsenergie vom Förderorgan der Zufördereinrichtung.

Wird nun ein flexibler Beutel von einem Zuförderer an einen Übernahmeförderer übergeben, so wirkt die vom vorderen Abschnitt, welcher bereits auf dem Förderorgan des Übernahmeförderers aufliegt, ausgehende Gleit- bzw. Haftreibung dem Transfer derart entgegen, dass der Zuförderer den Beutel nicht mehr weiter auf den Übernahmeförderer zu schieben vermag, sondern diesen vielmehr staucht. In anderen Worten, die Beutelware legt mit der vom Förderorgan der Zufördereinrichtung erhaltenden kinetischen Energie aufgrund fehlender Formstabilität die vorgesehene Transferstrecke nicht vollständig zurück.

Diese Problematik wird bei Vorliegen einer Förderlücke zwischen der Zufördereinrichtung und der Übernahmefördereinrichtung noch verstärkt, da in diesem Abschnitt der Transferstrecke kein Förderantrieb vorliegt.

Überdies besteht bei biegeschlaffer Beutelware auch eine Knickgefahr. Dadurch kann die Beutelware an Hindernissen, wie Vorsprüngen, oder in Lücken hängenbleiben.

Die oben genannten Schwierigkeiten führen dazu, dass die Beutelware nicht vollständig an den Ubernahmeförderer oder zumindest nicht in die gewünschte Förderposition auf dem Übernahmeförderer übergeben wird.

Nicht nur Beutelware sondern auch andere, insbesondere leichte und flexible bzw. biegeschlaffe Fördergüter können derartige Probleme beim Transfer verursachen. Nachfolgend wird daher in diesem Zusammenhang ganz allgemein der Begriff "empfindliche Fördergüter" verwendet.

Es ist nun eine Aufgabe der vorliegenden Erfindung, eine Förderanlage vorzuschlagen, welche auch bei empfindliche Fördergütern, wie Beutelware, eine zielgenaue sowie fehler- und störungsfreie Übergabe der Fördergüter gewährleistet.

Ferner ist es auch eine Aufgabe der vorliegenden Erfindung, eine Förderanlage vorzuschlagen, welche einen schonenden Transfer bzw. eine schonende Übergabe von Fördergütern, insbesondere von empfindlichen Fördergütern, wie Beutelware, zwischen einer Zufördereinrichtung und einer Übernahmefördereinrichtung gewährleistet.

Ferner ist es auch eine Aufgabe, zur Minimierung der Kosten und des Installationsaufwandes den Einsatz von bereits vorhandenen Einrichtungen zu nutzen.

Wenigstens eine Aufgabe wird mit den Merkmalen der unabhängigen Ansprüche 1 und 11 gelöst. Die abhängigen Ansprüche sowie die Beschreibung und die Figuren beinhalten besondere Ausführungsformen und Weiterbildungen der Erfindung.

Die erfindungsgemässe Förderanlage enthält eine Zufördereinrichtung, eine Übernahmefördereinrichtung sowie eine Steuerungseinrichtung und ist zum Übergeben von liegend geförderten Fördergütern von der Zufördereinrichtung an die Übernahmefördereinrichtung ausgelegt. Die Förderanlage bildet hierzu einen Transferbereich aus, in welchem die Fördergüter von der Zufördereinrichtung an die Übernahmefördereinrichtung übergeben werden.

Die Erfindung zeichnet sich dadurch aus, dass die Förderanlage eine Transferunterstützungseinrichtung enthält, welche dazu ausgelegt ist, im Transferbereich mittels Druckgas von unten auf mindestens ein vorbei bewegtes Fördergut einzuwirken.

Der Transferbereich entspricht insbesondere jenem Transportabschnitt, in welchem das Fördergut mit einem vorlaufenden, ersten Abschnitt bereits über dem Förderorgan des Übernahmeförderers und mit einem nachlaufenden, zweiten Abschnitt noch über dem Förderorgan des Zuförderers angeordnet ist.

Die Förderbahn entspricht jenem Teil der Transportbahn der Fördergüter, in welchem die Fördergüter mittels eines Förderorgan gefördert werden.

Die Transportbahn entspricht allgemein der Bewegungsbahn der Fördergüter über mehrere Fördereinrichtungen sowie einen Transferbereich. Die Breite der Transportbahn definiert jene Ausdehnung quer zur Transportrichtung, innerhalb welcher die Fördergüter entlang der Transportbahn angeordnet sein können.

Die Breite des Transferbereichs entspricht insbesondere der Breite der Transportbahn.

Mit Druckgas ist ein Gas oder Gasgemisch zu verstehen welches unter Druck aus der Transferunterstützungseinrichtung, z. B. aus mindestens einer Gasausströmöffnung, ausströmt.

Das Druckgas ist insbesondere Druckluft, wie sie in Förderanlagen auch für andere Zwecke eingesetzt wird. Das Druckgas wird insbesondere von einem Druckgasversorger und ganz besonders von einem Druckluftversorger über entsprechende Druckgas- bzw. Druckluftleitungen der Transferunterstützungseinrichtung bereitgestellt. Entsprechend umfasst die Förderanlage insbesondere auch einen Druckgasversorger bzw. ist mit einem solchen über eine Druckgasleitung verbunden.

Der Druckgasversorger, auch Druckgasversorgungseinrichtung genannt, kann einen Druckgas- bzw. Drucklufterzeuger, wie Kompressor, umfassen, mittels welchem Druckgas bzw. Druckluft erzeugt wird.

Der Druckgasversorger kann einen Druckgas- bzw. Druckluftspeicher umfassen, mittels welchem das Druckgas bzw. die Druckluft bereitgestellt wird.

Die Transferunterstützungseinrichtung enthält insbesondere mindestens eine Gasausströmöffnung, mittels welcher Druckgas von unten auf das mindestens eine, vorbei bewegte Fördergut strömen kann.

Die Transferunterstützungseinrichtung bzw. deren mindestens eine Gasausströmöffnung ist insbesondere zum gerichteten Ausstoss bzw. Ausströmen von Druckgas ausgelegt.

Die Transferunterstützungseinrichtung kann insbesondere mindestens eine Druckgasdüse enthalten, welche die mindestens eine Gasausströmöffnung ausbildet. Mittels der Druckgasdüse kann insbesondere Druckgas von unten auf das mindestens eine vorbei bewegte Fördergut gerichtet werden.

Die mindestens eine Druckgasdüse kann eine Schlitzdüse oder eine Runddüse sein.

Die Transferunterstützungseinrichtung kann einen Ausströmkörper umfassen, welcher die mindestens eine Gasausströmöffnung bzw. Druckgasdüse aufweist.

Die mindestens eine Gasausströmöffnung und gegebenenfalls der Ausströmkörper sind insbesondere unterhalb der Förder- bzw. Transportbahn des Fördergutes angeordnet.

Die mindestens eine Gasausströmöffnung und gegebenenfalls der Ausströmkörper sind insbesondere unterhalb der Niveaus der Förderflächen der Zufördereinrichtung und der Übernahmefördereinrichtung ausgebildet.

Der Ausströmkörper mit der mindestens einen Gasausströmöffnung ist insbesondere stationär, d.h. ortsfest angeordnet. Der Ausströmkörper mit der mindestens einen Gasausströmöffnung ist insbesondere unbeweglich angeordnet.

Die Begriffe stationär und ortsfest bedeuten insbesondere, dass das betreffende Bauteil bzw. Element als Ganzes nicht verschiebbar ist.

Die mindestens eine Gasausströmöffnung ist insbesondere stationär, d.h. ortsfest angeordnet.

Die Eigenschaften wie stationär bzw. ortsfest bzw. unbeweglich beziehen sich insbesondere auf die Förderanlage während ihres Betriebes. So können die betreffenden Bauteile für Wartungsarbeiten während eines Anlagestillstandes durchaus beweglich ausgelegt sein.

Es ist denkbar, dass der Ausströmkörper mit der mindestens einen Gasausströmöffnung stationär, d.h. ortsfest angeordnet ist, und die mindestens eine Gasausströmöffnung beweglich angeordnet ist.

Ist die mindestens eine Gasausströmöffnung Teil einer Druckgasdüse, so kann die mindestens eine Druckgasdüse und mit dieser die dazugehörige mindestens eine Gasausströmöffnung beweglich ausgebildet sein. So kann die Druckgasdüse beispielsweise schwenkbar sein. Die Druckgasdüse kann dennoch ortsfest angeordnet sein.

Die mindestens eine Gasausströmöffnung ist in Förderrichtung betrachtet insbesondere vor der Übernahmefördereinrichtung angeordnet.

Die mindestens eine Gasausströmöffnung ist in Förderrichtung betrachtet insbesondere zwischen dem Förderorgan der Zufördereinrichtung und dem Förderorgan der Übernahmefördereinrichtung angeordnet.

Die mindestens eine Gasausströmöffnung ist in Förderrichtung betrachtet insbesondere zwischen der Zufördereinrichtung und der Übernahmefördereinrichtung angeordnet.

Die Transferunterstützungseinrichtung enthält insbesondere ein Ventil, wie z. B. ein Durchlassventil, über welches die Zufuhr von Druckgas zur mindestens einen Gasausströmöffnung bzw. zum Ausströmkörper gesteuert werden kann. So kann mittels des Ventils insbesondere der Ausstoss von Druckgas aus der mindestens einen Gasausströmöffnung eingeschaltet und ausgeschaltet werden.

Gemäss einer Weiterbildung kann mittels des Ventils insbesondere die Menge des von der mindestens einen Gasausströmöffnung ausgestossenen Druckgas (pro Zeiteinheit) gesteuert werden. Das Ventil wird insbesondere durch die Steuerungseinrichtung gesteuert, mit welcher dieses verbunden ist.

Der Ausdruck "verbunden" im Zusammenhang mit der Steuerungseinrichtung ist nicht auf eine physische Leitungsverbindung beschränkt. Die Verbindung von Komponenten mit der Steuerungseinrichtung kann auch drahtlos sein. Dies, insbesondere wenn es lediglich um die Übertragung von Daten, wie Steuerbefehlen oder Messdaten, geht.

Gemäss einer Weiterbildung der Erfindung wird zwischen der Zufördereinrichtung und der Übernahmef6rdereinrichtung im Transferbereich eine Förderlücke ausgebildet. Die Transferunterstützungseinrichtung ist so ausgelegt, dass das Druckgas von unten durch die Förderlücke auf das mindestens eine, oberhalb vorbei bewegte Fördergut einwirkt.

Unter Förderlücke ist allgemein ein Streckenabschnitt zwischen zwei Förderern entlang der Transportbahn zu verstehen, in welchem kein Förderorgan zur Förderung des Fördergutes angeordnet ist. Die Förderlücke erstreckt sich in der Regel über die gesamte Breite der Transportbahn der Fördereinrichtung.

Die Förderlücke kann im vorliegenden Fall in Form eines zwischen der Zufördereinrichtung und der Übernahmefördereinrichtung angeordneten Spaltes (Förderspalt) bzw. Schlitzes vorliegen.

Allerdings kann die Förderlücke auch durch ein stationäres Führungselement überbrückt sein, welches eine Auflagefläche und insbesondere eine Gleitfläche für das zu transferierende Fördergut ausbildet. Das Führungselement kann z. B. ein Auflageblech sein.

Es ist auch möglich, dass die Transferunterstützungseinrichtung selbst ein solches Führungselement ausbildet. In diesem Fall ist das Führungselement insbesondere Teil des Ausströmkörpers, wobei die mindestens eine Gasausströmöffnung im Führungselement bzw. in der Auflagefläche bzw. Gleitfläche angeordnet ist.

Alternativ kann das Führungselement bzw. dessen Auflagefläche bzw. Gleitfläche Gasdurchströmöffnungen aufweisen, durch welche das von unterhalb aus dem Ausströmkörper, z. B. über Druckgasdüsen, ausströmende Druckgas nach oben hindurchströmen kann.

Die Transferunterstützungseinrichtung kann so ausgelegt sein, dass quer zur Transferrichtung über die gesamte Breite des Transferbereichs bzw. der Transportbahn der Fördergüter Druckgas von unten auf das mindestens eine, oberhalb vorbei bewegte Fördergut gerichtet wird.

Die Transferrichtung entspricht insbesondere der Förderrichtung des Förderguts im Übergang von der Zufördereinrichtung zur Übernahmefördereinrichtung. Die Transferrichtung kann von der Förderrichtung der Zufördereinrichtung und der Ubernahmefördereinrichtung abweichen.

Die Transferunterstützungseinrichtung enthält insbesondere mehrere Gasausströmöffnungen.

Die Transferunterstützungseinrichtung enthält insbesondere mehrere, in Transferrichtung aufeinanderfolgend angeordnete Gasausströmöffnungen.

Die Gasausströmöffnungen können in Transferrichtung versetzt zueinander oder hintereinander in Reihe bzw. in Reihen angeordnet sein.

Die Transferunterstützungseinrichtung enthält insbesondere mehrere quer zur Transferrichtung aufeinanderfolgend angeordnete Gasausströmöffnungen.

Die Gasausströmöffnungen können quer zur Transferrichtung versetzt zueinander oder hintereinander in Reihe bzw. in Reihen angeordnet sein. Das heisst, in Transferrichtung betrachtet können die Gasausströmöffnungen nebeneinander in Reihe bzw. in Reihen angeordnet sein.

Enthält die Transferunterstützungseinrichtung mehrere Gasausströmöffnungen so können diese eindimensional, z. B. quer zur Transferrichtung in einer Reihe angeordnet sein. Es ist jedoch auch möglich, dass eine Vielzahl von Gasausströmöfmungen über eine Fläche verteilt angeordnet sind, z. B. in einer zweidimensionalen Matrix. Diese zweidimensionale Anordnung erstreckt sich insbesondere über die gesamte Breite des Transferbereichs. Dies ist beispielsweise bei einer Kombination von mehreren sowohl in Transferrichtung als auch quer zur Transferrichtung aufeinander folgend angeordneten Gasausströmöffnungen der Fall.

Die zweidimensionale Anordnung von Gasausströmöffnungen kann einem, insbesondere regelmässigen Muster, wie z. B. einem Raster, entsprechen. Die zweidimensionale Anordnung von Gasausströmöffnungen kann auch zufällig sein.

Gemäss einer Ausführungsform enthält die Transferunterstützungseinrichtung mindestens eine, sich quer zur Transferrichtung erstreckende Schlitzdüse für Druckgas. Die Schlitzdüse kann sich über die gesamte Breite des Transferbereichs erstrecken.

Das von unten im Transferbereich auf ein Fördergut wirkende Druckgas bewirkt insbesondere einen Auftrieb beim betreffenden Fördergut.

Der Auftrieb kann z. B. helfen, das Fördergut im Transferbereich über eine Hürde zu transportieren. Eine solche Hürde kann z. B. der erhöhte Rand der Förderschale eines Schalenförderers sein.

So kann durch das von unten anströmende Druckgas zwischen dem Förderorgan der Übernahmefördereinrichtung, insbesondere dessen Förderfläche, und einem im Transferbereich mit mindestens einem Abschnitt über der Förderfläche der Übernahmefördereinrichtung angeordneten Fördergut ein Gaspolster, z. B. ein Luftpolster, ausgebildet werden.

Des Weiteren kann durch das von unten anströmende Druckgas zwischen dem Förderorgan der Zufördereinrichtung, insbesondere dessen Förderfläche, und einem im Transferbereich mit mindestens einem Abschnitt über der Förderfläche der Zufördereinrichtung angeordneten Fördergut ein Gaspolster, z. B. ein Luftpolster, ausgebildet werden.

Das im Transferbereich von unten an das Fördergut strömende Druckgas kann die Haftreibung zwischen dem angeströmten Fördergut und Teilen der Übernahmefördereinrichtung, insbesondere dem Förderorgan der Übernahmefördereinrichtung, aufheben bzw. reduzieren.

Das im Transferbereich von unten an das Fördergut strömende Druckgas kann die Haftreibung zwischen dem angeströmten Fördergut und Teilen der Zufördereinrichtung, insbesondere dem Förderorgan der Zufördereinrichtung, aufheben bzw. reduzieren.

Das im Transferbereich von unten an das Fördergut strömende Druckgas kann die Gleitreibung zwischen dem angeströmten Fördergut und Teilen der Übernahmefördereinrichtung, insbesondere dem Förderorgan der Übernahmefördereinrichtung, reduzieren.

Das im Transferbereich von unten an das Fördergut strömende Druckgas kann die Gleitreibung zwischen dem angeströmten Fördergut und Teilen der Zuf6rdereinrichtung, insbesondere dem Förderorgan der Zufördereinrichtung, reduzieren.

Es kann vorgesehen sein, dass im Transferbereich das Niveau der Förderfläche des Förderorgans der Zufördereinrichtung höher ist als das Niveau der Förderfläche des Förderorgans der Übernahmefördereinrichtung, so dass das Fördergut im Transferbereich von schräg oben auf das tiefer liegende Förderorgan der Übernahmefördereinrichtung übergeben wird.

In diesem Fall kann das von unten anströmende Druckgas auf die Flugbahn des auf ein tiefer liegendes Förderorgan fallenden Fördergutes einwirken, indem das Druckgas dem Fördergut beispielsweise zusätzlichen Auftrieb verleiht. So kann durch das Einwirken von Druckgas auf das Fördergut dessen Flugbahn verlängert und/oder dessen Fallwinkel verändert, insbesondere reduziert werden.

Die Transferunterstützungseinrichtung ermöglicht entsprechend einen kontrollierten Transfer der Fördergüter zwischen der Zufördereinrichtung und der Übernahmefördereinrichtung.

Die Transferunterstützungseinrichtung kann so ausgelegt sein, dass das Druckgas senkrecht von unten gegen das mindestens eine oberhalb vorbei bewegte Fördergut strömt bzw. gerichtet ist.

Gemäss einer Weiterbildung der Erfindung ist die Transferunterstützungseinrichtung so ausgelegt, dass das ausströmende Druckgas mit einer horizontalen Richtungskomponente von unten gegen bzw. auf das mindestens eine, vorbei bewegte Fördergut strömt bzw. gerichtet ist.

Das ausströmende Druckgas weist also sowohl eine horizontale als auch eine vertikal nach oben gerichtete Strömungskomponente auf. Das heisst, das ausströmende Druckgas strömt von schräg unten gegen das mindestens eine oberhalb vorbei bewegte Fördergut.

Die horizontale Richtungskomponente ist entsprechend eine zur Seite gerichtete Strömungskomponente. Diese Komponente kann in Transfer- bzw. Förderrichtung gerichtet sein. Diese Komponente kann entgegen der Transfer- bzw. Förderrichtung gerichtet sein. Diese Komponente kann auch quer zur Transfer- bzw. Förderrichtung gerichtet sein.

Es kann vorgesehen sein, dass die aus mehreren Gasausströmöffnungen ausströmenden Gasströme jeweils unterschiedliche horizontale Richtungskomponenten aufweisen.

So können Gasausströmöffnungen, welche dem Gasstrom eine Richtungskomponente in Transfer- bzw. Förderrichtung geben mit Gasausströmöffnungen, welche dem Gasstrom eine Richtungskomponente entgegen der Transfer- bzw. Förderrichtung geben, kombiniert sein. Ferner können diese Gasausströmöffnungen noch mit Gasausströmöffnungen kombiniert sein, bei welchem das Druckgas vertikal nach oben ausströmt.

Durch den Einsatz von Druckgasdüsen, welche die Gasausströmöffnungen beinhalten, kann das Druckgas gerichtet ausströmen.

Das Ausströmen von Druckgas mit einer horizontalen Richtungskomponente, insbesondere wenn dies aus mehreren Gasausströmöffnungen erfolgt, ermöglicht eine grossflächige Anströmung des Fördergutes von unten.

Ferner ermöglicht das Ausströmen von Druckgas mit einer horizontalen Richtungskomponente auch das Anströmen des Fördergutes in Bereichen, unterhalb welchen keine Gasausströmöffnungen platziert sind. So kann eine schräg gerichtete Druckgasströmung mit horizontaler Richtungskomponente bis zwischen das Förderorgan der Übernahmefördereinrichtung und dem Fördergut oder bis zwischen das Förderorgan der Zufördereinrichtung und dem Fördergut reichen.

Die Zufördereinrichtung kann ein einzelner Förderer sein. Die Zufördereinrichtung ist insbesondere zum liegenden Fördern der Fördergüter ausgelegt. Entsprechend bildet die Zufördereinrichtung bzw. dessen Förderorgan oder Förderorgane eine Förderfläche bzw. Förderflächen, insbesondere eine ebene Förderfläche bzw. ebene Förderflächen aus.

Die Zufördereinrichtung kann ein Bandförderer mit einem angetriebenen Förderband sein.
Die Zufördereinrichtung kann ein Modulbandförderer mit einem angetriebenen Modulband sein.
Die Zufördereinrichtung kann ein Plattenkettenförderer mit einer angetriebenen Plattenkette sein.
Die Zufördereinrichtung kann ein Mattenkettenförderer mit einer angetriebenen Mattenkette sein.
Die Zufördereinrichtung kann eine Rollenbahn mit angetriebenen Rollen sein.
Die Zufördereinrichtung kann ein Gurt- oder Riemenförderer sein. Der Gurt- bzw. Riemenförderer umfasst mehreren parallel zueinander und insbesondere voneinander beabstandet angeordnete, angetriebene Fördergurten bzw. Förderriemen. Die Fördergurten bzw. Förderriemen sind gleichgerichtet antreibbar.

Die Zufördereinrichtung kann auch aus mehreren in Förderrichtung hintereinander angeordneten Förderern sein. Die Förderorgane der Förderer bewegen sich insbesondere gleichgerichtet, d.h. in dieselbe Richtung.

Die Förderer können typengleich sein. Die Förderer können auch typenverschieden sein. So kann die Zufördereinrichtung zwei oder mehr als zwei Förderer eines oben genannten Typs umfassen.

Die Zufördereinrichtung kann so ausgelegt und angeordnet sein, dass die Fördergüter seitlich, d.h. von der Seite der Übernahmefördereinrichtung zugefördert werden. Die Zufördereinrichtung kann so ausgelegt sein, dass die Fördergüter in einem spitzen Winkel von kleiner 90° (Winkelgrad), insbesondere von kleiner 70° von der Seite der Übernahmefördereinrichtung zugefördert werden. Die Fördergüter können allerdings auch im rechten Winkel, d.h. in einem Winkel von 90° seitlich der Übernahmefördereinrichtung zugefördert werden.

Erfolgt die Zufuhr der Fördergüter seitlich in einem spitzen Winkel von weniger als 90°, so umfasst die Zufördereinrichtung insbesondere einen an die Übernahmefördereinrichtung angrenzenden Gurtförderer bzw. Riemenförderer oder besteht aus einem solchen.

Es ist auch möglich, dass die Zufördereinrichtung die Fördergüter stirnseitig der Übernahmefördereinrichtung zufördert. Stirnseitig bedeutet insbesondere, dass die Förderrichtungen der Zufördereinrichtung und der Übernahmefördereinrichtung im Transferbereich gleichgerichtet sind.

Die Zufördereinrichtung kann Teil einer Einschleusvorrichtung bzw. Einspeisevorrichtung sein. Die Zufördereinrichtung bildet aus oder umfasst in Förderrichtung den letzten Förderer der Einschleusvorrichtung vor dem Transfer. Dieser letzte Förderer kann insbesondere ein Gurtförderer oder Riemenförderer sein. Die Einschleusvorrichtung kann ferner einen Bereitstellungsförderer umfassen, welcher die Fördergüter der Zufördereinrichtung zufördert und an diese übergibt.

Die Übernahmefördereinrichtung ist insbesondere zum liegenden Fördern der Fördergüter ausgelegt. Entsprechend bildet die Übernahmefördereinrichtung bzw. dessen Förderorgan eine Förderfläche bzw. Förderflächen, insbesondere eine ebene Förderfläche bzw. ebene Förderflächen für die Fördergüter aus.

Die Übernahmefördereinrichtung kann ein Bandförderer mit einem angetriebenen Förderband sein.
Die Übernahmefördereinrichtung kann ein Modulbandförderer mit einem angetriebenen Modulband sein.
Die Übernahmefördereinrichtung kann ein Plattenkettenförderer mit einer angetriebenen Plattenkette sein.
Die Übernahmefördereinrichtung kann ein Mattenkettenförderer mit einer angetriebenen Mattenkette sein.
Die Übernahmefördereinrichtung kann eine Rollenbahn mit angetriebenen Rollen sein.
Die Übernahmefördereinrichtung kann ein Gurtförderer oder Riemenförderer der bereits oben beschriebenen Art sein.
Die Übernahmefördereinrichtung kann ein Quergurtförderer sein.
Die Übernahmefördereinrichtung kann ein Schuhförderer sein.

Die Übernahmefördereinrichtung ist insbesondere ein Sortierförderer bzw. Sortierer. Der Sortierer ist insbesondere ein Förderrundlauf. Entsprechend sind die Übernahmefördereinrichtung und die Zufördereinrichtung insbesondere Teil einer Sortieranlage bzw. entspricht die Förderanlage einer Sortieranlage.

Der Sortierförderer ist dazu ausgelegt, Fördergüter an entlang der Förderbahn des Sortierförderers angeordneten, vorbestimmten Abgabestationen abzugeben.

So beschreiben die Veröffentlichungsschriften WO 2017/076541 A1 und WO 2013/075714 A1 jeweils einen Sortierförderer mit kippbaren Förderstreckensegmenten zum Sortieren von Fördergütern wie beispielsweise Pakete.

Die Übernahmefördereinrichtung ist insbesondere ein Förderer mit einem Förderorgan, welches diskrete Fördereinheiten, wie Förderschalen oder Förderplatten ausbildet. Die diskreten Förderorgane können miteinander verkettet sein. Entsprechend werden die Fördergüter insbesondere getaktet von der Zufördereinrichtung an die Fördereinheiten der Übernahmefördereinrichtung übergeben.

Die Übernahmefördereinrichtung ist insbesondere ein Schalenförderer, ganz besonders ein Kippschalenförderer. Der Schalenförderer zeichnet sich durch eine Vielzahl von hintereinander entlang der Förderbahn angeordnete und insbesondere miteinander verketteten Förderschalen aus. Die Förderschalen bilden jeweils ein Aufnahmefach mit einer Förderfläche für das Fördergut aus. Das Aufnahmefach entspricht insbesondere einem Förderplatz für ein Fördergut.

Bei einem Kippschalenförderer sind die Förderschalen zwecks Abgabe von Fördergütern über einen Kippmechanismus in Förderrichtung betrachtet seitlich kippbar. Ein solcher Kippschalenförderer ist z. B. in der US 5,632,589 A beschrieben.

Die Förderschalen können schwenkbare Seitenwände haben, welche zur Abgabe der Fördergüter von einer Schliessstellung, welche das Fördergut seitlich zurückhalten, in eine Offenstellung, in welcher das Fördergut von der Förderschale abrutschen kann, geschwenkt werden können. So können die Seitenwände beispielsweise herunterklappbar sein, so dass das Fördergut über die heruntergeklappte Seitenwand in Förderrichtung betrachtet seitlich von der Förderschale abrutschen kann. Die Veröffentlichungsschrift CH 710 851 A1 beschreibt einen solchen Kippschalenförderer.

Die Übernahmefördereinrichtung kann auch ganz allgemein ein oben genannter Förderer sein. Der Förderer kann eine Mehrzahl von Förderschalen umfassen, welche dem Förderorgan des Förderers lose aufliegen, und welche zwecks Abgabe der Produkte über eine Neigeeinrichtung schrägstellbar sind. Ein solcher Förderer ist z. B. in der WO 2019/042761 A1 und in der EP 3 450 355 A1 offenbart.

Sollen Fördergüter von unterschiedlichem Gewicht und von unterschiedlicher Beschaffenheit, wie z. B. Pakete und Beutelware, mittels der Zufördereinrichtung der Übernahmefördereinrichtung übergeben werden, so benötigen unter Umständen nicht sämtliche Fördergüter eine unterstützende Einwirkung mittels Druckgas durch die Transferunterstützungseinrichtung.

So benötigen insbesondere leichte und biegeschlaffe Fördergüter, z.B. Beutelware, eine erfindungsgemässe Transferunterstützung mittels von unten auf das Fördergut einwirkendem Druckgas. Schwere und insbesondere starre Fördergüter, wie z. B. Pakete lassen sich aus den bereits oben genannten Gründen auch ohne Unterstützung in der Regel problemlos transferieren. Entsprechend ist es ausreichend, wenn die Transferunterstützungseinrichtung bzw. der Ausstoss von Druckgas lediglich bei den empfindlichen Fördergütern aktiviert wird.

Hierzu kann die Förderanlage in einer Weiterbildung der Erfindung eine Sensoreinrichtung zum Detektieren der Präsenz, und gegebenenfalls auch wenigstens einer Eigenschaft der dem Transferbereich zugeförderten Fördergüter enthalten.

Die Sensoreinrichtung kann insbesondere die Präsenz, und gegebenenfalls auch wenigstens eine Eigenschaft der auf der Zufördereinrichtung oder auf einem der Zufördereinrichtung in Förderrichtung vorgelagerten Förderer, insbesondere der Einschleusvorrichtung, geförderten Fördergüter detektieren.

Die Sensoreinrichtung kann insbesondere die Präsenz, und gegebenenfalls auch wenigstens eine Eigenschaft der auf einer Einschleusvorrichtung geförderten Fördergüter detektieren.

Die Sensoreinrichtung kann insbesondere eine optoelektronische Sensoreinheit umfassen. Die optoelektronische Sensoreinheit kann z. B. eine Lichtschranke sein. Die optoelektronische Sensoreinheit ist insbesondere eine Kamera.

Die Sensoreinrichtung kann eine Waage bzw. ein Wägesystem zum Wägen der dem Transferbereich zugeförderten Fördergüter enthalten. Das Wägen kann z. B. während der Förderung der Fördergüter erfolgen.

Die Waage bzw. das Wägesystem kann das besagte Gewicht beispielsweise während der Förderung der Fördergüter auf der Zufördereinrichtung ermitteln.

Die Waage bzw. das Wägesystem kann das besagte Gewicht beispielsweise während der Förderung der Fördergüter auf einem der Zufördereinrichtung in Förderrichtung vorgelagerten Förderer ermitteln.

Die Waage bzw. das Wägesystem kann das Gewicht insbesondere in der Einschleusvorrichtung ermitteln.

Die Sensoreinrichtung ist insbesondere zum Detektieren von wenigstens einer der folgenden Eigenschaften der dem Transferbereich zugeförderten Fördergüter ausgelegt:
- Form des Fördergutes;
- Höhe des Fördergutes;
- Breite des Fördergutes:
- Grösse des Fördergutes;
- Gewicht des Fördergutes;
- Ausrichtung des Fördergutes.

Die Sensoreinrichtung ist insbesondere zum Detektieren von mehreren der oben genannten Eigenschaften ausgelegt.

Wie nachfolgend noch näher anhand des Verfahrens erläutert, ermöglicht die Sensoreinrichtung eine sensorbasierte Steuerung der Transferunterstützungseinrichtung.

Gemäss einer Weiterbildung ist die Steuerungseinrichtung dazu ausgelegt, den Ausstoss von Druckgas derart zu steuern, dass das mindestes eine Fördergut zielgenau auf einen vorbestimmten Förderplatz der Übernahmef6rdereinrichtung übergeben wird.

Gemäss einer Verfeinerung dieser Weiterbildung ist die Steuerungseinrichtung dazu ausgelegt, den Ausstoss von Druckgas in Abhängigkeit von der mindestens einen detektierten Eigenschaft des Förderguts derart zu steuern, dass das mindestes eine Fördergut zielgenau auf einen vorbestimmten Förderplatz der Übernahmefördereinrichtung übergeben wird.

Die Erfindung betrifft auch ein Verfahren zur Übergabe von Fördergütern von einer Zufördereinrichtung an eine Übernahmefördereinrichtung mittels einer oben beschriebenen Förderanlage.

Gemäss Verfahren wird mindestens ein Fördergut im Transferbereich mittels der Transferunterstützungseinrichtung von unten mit Druckgas angeströmt.

Durch das Anströmen des Fördergutes mit Druckgas von unten erfährt das Fördergut insbesondere einen Auftrieb, dank welchem das Fördergut in Kombination mit der vom Förderorgan der Zufördereinrichtung erhaltenen kinetischen Energie die vorgesehene Transferstrecke zurücklegen kann. Dadurch wird sichergestellt, dass das Fördergut seinen vorgesehenen Förderplatz auf der Übernahmefördereinrichtung erreicht.

Der Auftrieb sorgt insbesondere dafür, dass die Haftreibung bzw. Gleitreibung abnimmt und folglich die Reibungsverluste bzw. der Verlust an kinetischer Energie während des Transfers abnehmen.

Gemäss einer Weiterbildung der Erfindung wird das mindestens eine Fördergut im Transferbereich mittels der Transferunterstützungseinrichtung von schräg unten mit Druckgas angeströmt.

Gemäss einer Weiterbildung der Erfindung wird das mindestens eine Fördergut mittels der Transferunterstützungseinrichtung im Transferbereich quer zur Transferrichtung über die gesamte Breite des Transferbereichs von unten mit Druckgas angeströmt.

Gemäss einer Weiterbildung der Erfindung strömt das Druckgas durch eine Förderlücke im Transferbereich von unten auf das mindestens eine Fördergut.

Gemäss der bereits weiter oben erwähnten Weiterbildung der Erfindung wird mittels der Sensoreinrichtung mindestens die Präsenz eines dem Transferbereich zugeförderten Fördergutes detektiert.

Hierzu ist die Sensoreinrichtung mit der Steuerungseinrichtung verbunden, welche wiederum auch mit der Transferunterstützungseinrichtung verbunden ist und diese steuert. Die Steuerung erfolgt insbesondere über das (Durchlass)Ventil.

Die Förderanlage enthält in diesem Kontext insbesondere auch eine Auswerteeinrichtung, welche die Signale der Sensoreinrichtung mittels einer Auswertesoftware auswertet und daraus Steuerbefehle zur Steuerung der Transferunterstützungseinrichtung erzeugt.

So kann vorgesehen sein, dass die Steuerungseinrichtung die Transferunterstützungseinrichtung bzw. den Ausstoss von Druckgas aktiviert, wenn die Sensoreinrichtung die Präsenz eines Fördergutes detektiert. Da die Sensoreinrichtung die Fördergüter stromaufwärts von der Transferunterstützungseinrichtung detektiert, aktiviert die Steuerungseinrichtung die Transferunterstützungseinrichtung bzw. den Ausstoss von Druckgas insbesondere zeitverzögert.

Nach Abschluss der Übergabe des Fördergutes kann die Steuerungseinrichtung die Transferunterstützungseinrichtung bzw. den Ausstoss von Druckgas bis zum Eintreffen des nächsten Fördergutes wieder deaktivieren.

Alternativ zum Aktivieren und Deaktiveren der Transferunterstützungseinrichtung bzw. des Ausstosses von Druckgas kann auch ein bereits vorhandener (Grund-) Ausstoss von Druckgas zu Beginn des Transfers erhöht und nach erfolgtem Transfer wieder reduziert werden.

Die Auswerteeinrichtung ist nicht zwingend als separate, abgeschlossene physische Einheit zu betrachten.

Die Auswerteeinrichtung kann Teil der Steuerungseinrichtung sein. Die Auswerteeinrichtung kann auch Teil der Sensoreinrichtung sein.

Ferner ist es auch möglich, dass gewisse Funktionen der Auswerteeinrichtung, wie die Auswertung der Sensordaten, in der Sensoreinrichtung und andere Funktionen, wie die Generierung von Steuerbefehlen aus den Auswertedaten, in der Steuerungseinrichtung umgesetzt sind.

Gemäss einer Weiterentwicklung dieser Weiterbildung ist die Sensoreinrichtung dazu ausgelegt, mindestens eine Eigenschaft des Fördergutes zu ermitteln bzw. zu detektieren, welche das Identifizieren von empfindlichen Fördergütern erlaubt bzw. erleichtert.

Die Auswerteeinrichtung umfasst insbesondere eine Auswertesoftware zur Identifizierung von empfindlichen Fördergütern auf Basis der ermittelten bzw. detektierten mindestens einen Eigenschaft der Fördergüter.

Entsprechend ist die sensorbasierte Steuerung der Transferunterstützungseinrichtung dazu ausgelegt, die Transferunterstützungseinrichtung bzw. den Ausstoss von Druckgas lediglich bei der Präsenz eines empfindlichen Fördergutes zu aktivieren.

Alternativ zum Aktivieren und Deaktivieren der Transferunterstützungseinrichtung bzw. des Ausstosses von Druckgas kann auch hierbei empfindlichen Fördergütern ein bereits vorhandener (Grund)Ausstoss von Druckgas zu Beginn des Transfers erhöht und nach Abschluss des Transfers wieder reduziert werden.

Für die sensorbasierte Steuerung werden mittels der Sensoreinrichtung insbesondere mindestens eine der folgenden Eigenschaften der dem Transferbereich zugeförderten Fördergüter detektiert:
- Form des Fördergutes;
- Höhe des Fördergutes;
- Breite des Fördergutes;
- Grösse des Fördergutes;
- Gewicht des Fördergutes;
- Ausrichtung des Fördergutes;
- Beschaffenheit des Fördergutes.

Die mindestens eine detektierte Eigenschaft wird durch die Auswerteeinrichtung ausgewertet und es wird ermittelt, ob ein empfindliches Fördergut vorliegt. Entsprechend wird, wie oben erwähnt, der Ausstoss von Druckgas über die Steuerungseinrichtung in Abhängigkeit von der Präsenz eines empfindlichen Fördergutes gesteuert.

Ergibt beispielsweise die Auswertung der mindestens einen detektierten Eigenschaft, dass ein empfindliches Fördergut, z. B. eine Beutelware vorliegt, so wird die Transferunterstützungseinrichtung über die Steuerungseinrichtung entsprechend aktiviert bzw. der Ausstoss von Druckgas aktiviert oder erhöht. Ergibt die Auswertung der mindestens einen detektierten Eigenschaft dahingegen, dass kein empfindliches Fördergut, z. B. ein schweres Paket vorliegt, so wird die Transferunterstützungseinrichtung nicht aktiviert bzw. wird der Ausstoss von Druckgas nicht aktiviert oder erhöht.

Idealerweise werden mehrere Eigenschaften des Fördergutes ermittelt bzw. detektiert, um empfindliche Fördergüter zu identifizieren.

So können beispielsweise mittels einer Kamera und einer Waage leichte und vergleichsweise flache Fördergüter, z. B. Beutelware, wie sie typisch sind für empfindliche Fördergüter, über die Auswerteeinheit bzw. die dazugehörige Auswertesoftware identifiziert werden. Mit einer entsprechenden Auswertesoftware lässt sich sogar ganz spezifisch biegeschlaffe Beutelwareidentifizieren.

Gemäss einer weiteren Verfeinerung lassen sich auf Grundlage der ermittelten bzw. detektierten mindestens einen Eigenschaft, als empfindlich identifizierte Fördergüter in verschiedene Kategorien einteilen (z. B. leichte, mittelschwere, schwere, biegeschlaffe Beutelware).

In Abhängigkeit von der Kategorie des empfindlichen Fördergutes kann die Steuerungseinrichtung den Ausstoss von Druckgas variieren (z. B. starker Ausstoss bei schwerer Beutelware, mässiger Ausstoss bei mittelschwerer Beutelware und kleiner Ausstoss bei leichter Beutelware).

Damit kann der Ausstoss des Druckgases an die Eigenschaften, wie Gewicht oder Flächengrösse des Fördergutes angepasst werden. Dies erhöht die Zielsicherheit beim Transfer der Fördergüter auf die Förderplätze der Übernahmefördereinrichtung.

So wird gemäss einer Weiterbildung der Ausstoss von Druckgas mittels Steuerungseinrichtung derart gesteuert, dass das mindestens eine Fördergut zielgenau auf einen vorbestimmten Förderplatz der Übernahmef6rdereinrichtung übergeben wird.

Gemäss einer Verfeinerung dieser Weiterbildung wird der Ausstoss von Druckgas mittels Steuerungseinrichtung in Abhängigkeit von mindestens einer der detektierten Eigenschaften des Förderguts derart gesteuert, dass das mindestes eine Fördergut zielgenau auf einen vorbestimmten Förderplatz der Übernahmefördereinrichtung übergeben wird.

Die liegend geförderten Fördergüter sind insbesondere Liegewaren. Die Fördergüter können z. B. Pakete oder Beutelware sein. Die Beutelware, z. B. Plastikbeutel, können Textilien, wie Kleider, enthalten. Die Fördergüter können auch Druckereiprodukte sein, z. B. folierte Druckereiprodukte, wie Zeitschriften und Broschüren sein.

Die Steuerungseinrichtung steuert des Weiteren insbesondere auch den Antrieb der Übernahmefördereinrichtung und der Zufördereinrichtung. Bei einer Übernahmefördereinrichtung mit diskreten Fördereinheiten sorgt die Steuerungseinrichtung insbesondere für eine getaktete Übergabe der Fördergüter.

Die vorliegende Erfindung weist den Vorteil auf, dass selbst empfindliche Fördergüter mittels der erfindungsgemässen Transferunterstützungseinrichtung zielgenau sowie fehler- und störungsfrei transferiert werden können. Das heisst, die betreffenden Fördergüter erreichen den vorgesehenen Förderplatz in der Übernahmefördereinrichtung in der vorgesehen Position.

Die Transferunterstützung ist einfach aufgebaut und daher auch für Nachrüstungen geeignet. Das Druckgas kann ohne weiteren Investitionen in Form von Druckluft von einem in der Regel bereits vorhandenen Druckluftversorger bezogen werden. Solche Druckluftversorger werden beispielsweise auch für den Betrieb von pneumatischen Antrieben in der Förderanlage eingesetzt.

Nachfolgend wird der Erfindungsgegenstand anhand von Ausführungsbeispielen, welche in den beiliegenden Figuren dargestellt sind näher erläutert. Es zeigen jeweils schematisch:
- Figur 1:: eine Draufsicht einer Ausführungsform einer erfindungsgemässen Förderanlage;
- Figur 2:: eine Seitenansicht eines Ausschnitts einer erfindungsgemässen Förderanlage mit Fokus auf den Transferbereich gemäss einer Ausführungsform;
- Figur 3:: eine Seitenansicht eines Ausschnitts einer erfindungsgemässen Förderanlage mit Fokus auf den Transferbereich gemäss einer weiteren Ausführungsform;
- Figur 4:: eine perspektivische Ansicht eines Ausschnittes eines Kippschalenförderers;
- Figur 5:: eine Seitenansicht eines Ausschnittes eines Kippschalenförderers;
- Figur 6:: eine Draufsicht eines Ausschnittes eines Kippschalenförderers;
- Figur 7:: eine Draufsicht eines Ausschnittes der erfindungsgemässen Förderanlage mit Fokus auf den Transferbereich gemäss einer Ausführungsform;
- Figur 8:: eine Draufsicht eines Ausschnittes der erfindungsgemässen Förderanlage mit Fokus auf den Transferbereich gemäss einer weiteren Ausführungsform;
- Figur 9:: eine Draufsicht eines Ausschnittes der erfindungsgemässen Förderanlage mit Fokus auf den Transferbereich gemäss einer weiteren Ausführungsform;
- Figur 10:: eine Seitenansicht eines Ausschnitts einer erfindungsgemässen Förderanlage mit Fokus auf den Transferbereich gemäss einer weiteren Ausführungsform;
- Figur 11:: eine Seitenansicht eines Ausschnitts einer erfindungsgemässen Förderanlage mit Fokus auf den Transferbereich gemäss einer weiteren Ausführungsform.

Grundsätzlich sind in den Figuren gleiche Teile mit gleichen Bezugszeichen versehen.

Für das Verständnis der Erfindung sind gewisse Merkmale in den Figuren nicht oder nur sehr stark abstrahiert dargestellt. Die nachfolgend beschriebenen Ausführungsbeispiele stehen lediglich beispielhaft für den Erfindungsgegenstand.

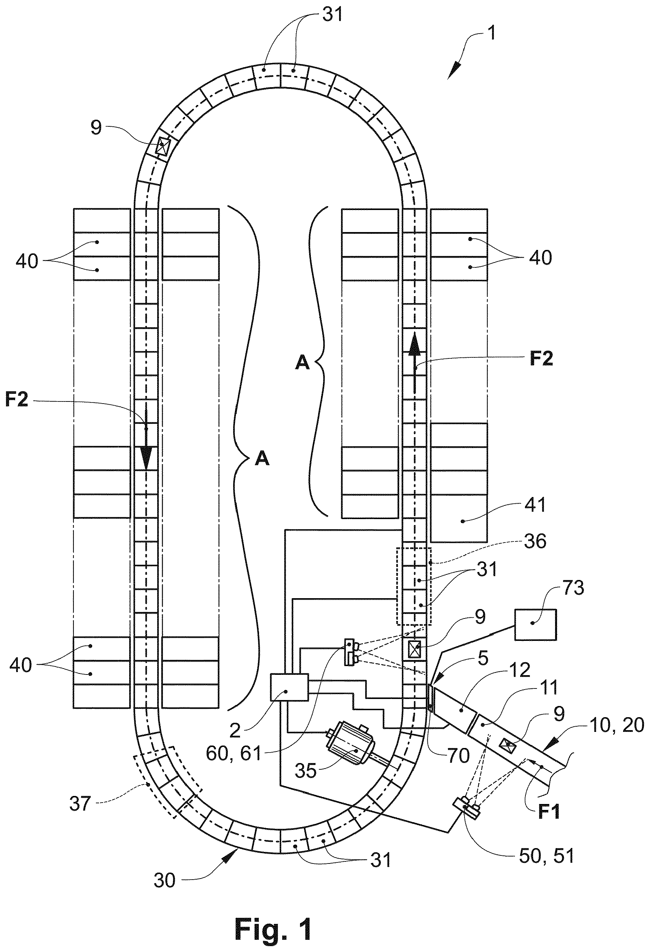

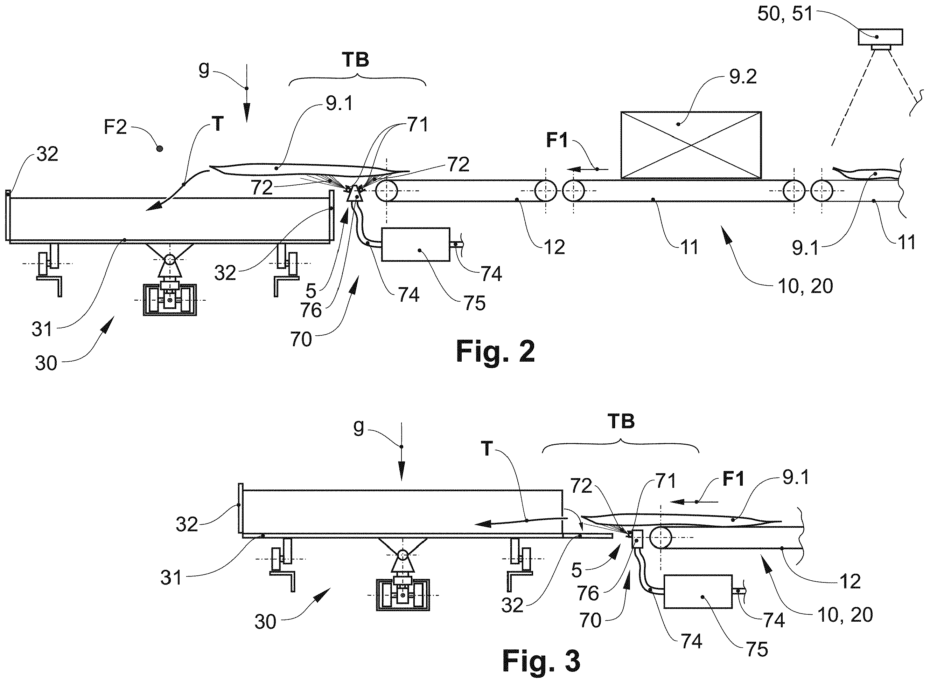

Die **Figur 1** zeigt eine erfindungsgemässe Förderanlage 1 mit einer Einschleusvorrichtung 20 zum Einschleusen bzw. Transferieren von Fördergütern 9 auf eine Übernahmefördereinrichtung 30. Die Einschleusvorrichtung 20 umfasst eine Zufördereinrichtung 10 mit einem Bandförderer 11 mit Förderband und einem daran anschliessenden Gurt- oder Riemenförderer 12, mit mehreren parallel zueinander verlaufenden Fördergurten. Der Gurt- oder Riemenförderer 12 bildet den abschliessenden, an die Übernahmefördereinrichtung 30 angrenzenden Förderer. Die Fördergüter 9 werden auf der Zufördereinrichtung 10 in Förderrichtung F1 in einen Transferbereich TB im Übergang von der Zufördereinrichtung 10 zur Übernahmefördereinrichtung 30 gefördert (siehe auch Figuren 2-3 und 7-11).

Die Zufördereinrichtung 10 fördert die Fördergüter 9 in einem spitzen Winkel von kleiner 70° (Winkelgrad) von der Seite der Übernahmefördereinrichtung 30 zu. Der spitze Winkel bezieht sich auf den Winkel zwischen den beiden aufeinander zulaufenden Förderrichtungen F1, F2 der Zuförder- 10 und Übernahmefördereinrichtung 30 im Transferbereich TB.

Die Förderanlage 1 enthält des Weiteren eine Steuerungseinrichtung 2 zur Steuerung der Förderanlage 1.

Die Übernahmefördereinrichtung 30 ist ein Sortierförderer, welcher diskrete Fördereinheiten 31, wie Förderschalen, insbesondere Kippschalen, enthält. Die diskreten Fördereinheiten 31 sind insbesondere miteinander verkettet. Der Sortierförderer 30 ist als Rundlauf ausgebildet, auf welchem die Fördereinheiten 31 in Förderrichtung F2 entlang einer geschlossenen Umlaufbahn bewegt werden. Der Sortierförderer 30 wird über einen Antrieb 35 angetrieben, welcher zur Steuerung des Antriebs 35 mit der Steuerungseinrichtung 2 verbunden ist.

Entlang der Umlaufbahn des Sortierförderers 30 sind Abgabezonen A mit jeweils einer Mehrzahl von Abgabestationen 40 angeordnet, an welchen die Fördergüter 9 vorbestimmt abgegeben werden.

In Förderrichtung F2 des Sortierförderers 30 betrachtet im Anschluss an den Transferbereich und vor der ersten Abgabestation 40 bzw. Abgabezone A ist eine Schrägstellungseinrichtung 36 zur Schrägstellung der Fördereinheiten 31 angeordnet.

Die Fördereinheiten 31 werden entsprechend in Schrägstellung durch die Abgabezone A gefördert. Durch eine vorbestimmte Freigabe der Fördergüter 9 rutschen diese an den entsprechenden Abgabestationen 40 von den schräggestellten Fördereinheiten 31 zur Abgabestation 40 hin ab.

Des Weiteren enthält der Sortierförderer 30 eine in Förderrichtung F2 des Sortierförderers 30 betrachtet nach der letzten Abgabestation 40 bzw. Abgabezone A und vor dem Transferbereich TB eine Horizontalstellungseinrichtung 37 zur Horizontalstellung der Fördereinheiten 31. Die Fördereinheiten 31 werden entsprechend in horizontaler Stellung in den Transferbereich TB bewegt.

Ferner umfasst der Sortierförderer eine in Förderrichtung F2 des Sortierförderers 30 im Anschluss an den Transferbereich TB und vor der ersten Abgabestation 40 angeordnete Ausschleusstation 41 zum Ausschleusen von fehlerhaften Fördergütern 9.

Zwischen dem Sortierförderers 30 und der Zufördereinrichtung 10 ist eine nachfolgend noch detaillierter beschriebene Transferunterstützungseinrichtung 70 angeordnet. Diese ist dazu ausgelegt, im Transferbereich TB mittels Druckgas 72 von unten auf mindestens ein vorbei bewegtes Fördergut 9 einzuwirken. Die Transferunterstützungseinrichtung 70 wird von einem Druckgasversorger 73 mit Druckgas versorgt. Die Transferunterstützungseinrichtung 70 ist insbesondere in einer Förderlücke 5 zwischen dem Sortierförderer 30 und der Zufördereinrichtung 10 angeordnet.

Die Förderanlage 1 enthält auch eine Sensoreinrichtung 50. Die Sensoreinrichtung 50 enthält eine optoelektronische Sensoreinheit 51, insbesondere eine Kamera, zum Detektieren der Präsenz eines auf der Einschleusvorrichtung 20 bzw. auf dem Bandförderer 11 der Zufördereinrichtung 10 angeordneten und entsprechend dem Transferbereich TB zugeförderten Fördergutes 9.

Die Sensoreinrichtung 50 wie auch die Transferunterstützungseinrichtung 70 sind mit der Steuerungseinrichtung 2 verbunden. So lässt sich die Transferunterstützungseinrichtung 70 bei der Detektion eines Fördergutes 9 auf der Einschleusvorrichtung 20 gezielt aktivieren, so dass das nur bei Anwesenheit eines Fördergutes 9 im Transferbereich TB Druckgas ausgestossen wird.

Mit der Sensoreinrichtung 50 lassen sich neben der Präsenz eines Fördergutes 9 insbesondere auch mindestens eine Eigenschaft des Fördergutes, wie Grösse (Breite, Höhe, Länge), detektieren.

Auf diese Weise lässt sich die Transferunterstützungseinrichtung 70 nur bei der Detektion eines empfindlichen Fördergutes 9, wie z. B. eine Beutelsendung, gezielt aktivieren, so dass nur bei Anwesenheit eines empfindlichen Fördergutes 9 im Transferbereich TB Druckgas ausgestossen wird.

Die Förderanlage 1 enthält ferner eine weitere Sensoreinrichtung 60 mit einer optoelektronischen Sensoreinheit 61, wie Kamera, zum Detektieren von fehlerhaften oder fehlplatzierten Fördergütern 9 auf dem Sortierförderer 30. Die Sensoreinheit 61 detektiert in Förderrichtung F2 betrachtet zwischen dem Transferbereich TB und der Abgabezone A

Der in **Figur 2** gezeigte Ausschnitt einer Förderanlage 1 mit Fokus auf den Transferbereich TB kann z. B. Teil der Förderanlage 1 gemäss Figur 1 sein.

Die Einschleusvorrichtung 20 umfasst eine Zufördereinrichtung 10 mit einem ersten und zweiten Bandförderer 11 mit jeweils einem Förderband und mit einem in Förderrichtung F1 abschliessenden Gurt- oder Riemenförderer 12, welcher an die Übernahmefördereinrichtung 30 angrenzt. Der Gurt- oder Riemenförderer 12 entspricht dem in Förderrichtung F1 letzten Förderer der Zufördereinrichtung 10.

Die Übernahmefördereinrichtung 30 ist ein Schalenförderer, insbesondere ein Kippschalenförderer mit Förderschalen 31. Die Förderschalen 31 weisen Seitenwände 32 auf, welche zusammen mit einem Förderschalenboden eine Aufnahme für das Fördergut 9.1, 9.2 ausbilden. Gemäss der vorliegenden Ausführungsform liegt das Niveau der Förderfläche der Zufördereinrichtung 10 über der Oberkante der Seitenwände 32 der Förderschalen 31, so dass die Fördergüter 9.1, 9.2 im Transferbereich TB ausgehend von der Zufördereinrichtung 10 horizontal über die Seitenwand 32 der Förderschale 31 in die Aufnahme transferiert werden.

Zwischen der Zufördereinrichtung 10, d.h. dem in Förderrichtung F1 vorderen Umlenkpunkt des Förderbandes, und der Übernahmefördereinrichtung 30, d.h. der Förderschale 31, wird eine Förderlücke 5 in Form eines Förderspaltes ausgebildet.

Die Transferunterstützungseinrichtung 70 umfasst einen in der Förderlücke 5 angeordneten Ausströmkörper 76 mit Druckgasdüsen 71 für den gerichteten Ausstoss von Druckgas 72. Wenigstens eine der Druckgasdüsen 71 ist dazu ausgelegt, Druckgas 72 von schräg unten mit einer Strömungskomponente in Transferrichtung T auszustossen. Ferner ist wenigstens eine der Druckgasdüsen 71 dazu ausgelegt, Druckgas 72 von schräg unten mit einer Strömungskomponente entgegen der Transferrichtung T bzw. entgegen der Förderrichtung F1 auszustossen. Der Ausstoss von Druckgas 72 bewirkt einen der Schwerkraft g entgegenwirkenden Auftrieb bei dem zu transferierenden Fördergut 9.1. Der Auftrieb verhindert ein vorzeitiges Absinken des Fördergutes 9 auf die Förderschale 31. Dadurch wird gewährleistet, dass das Fördergut 9.1 problemlos über die Seitenwand 32 in die Aufnahme der Förderschale 31 transferiert wird.

Ohne den Einsatz von Druckgas 72 besteht die Gefahr, dass eine biegeschlaffe Beutelsendung 9.1 während des Transfers mit einem vorderen Abschnitt schwerkraftbedingt nach unten wegknickt wird, wodurch diese infolgedessen nicht mehr ordnungsgemäss, d.h. nicht mehr vollständig über die Seitenwand 32 hinweg in die Aufnahme der Förderschale 31 transferiert wird.

Die Transferunterstützungseinrichtung 70 umfasst auch ein geschaltetes Ventil 75, über welches die Druckgaszufuhr gesteuert werden kann. Das Ventil 75 wird über die Steuerungseinrichtung 2 gesteuert.

Die Transferunterstützungseinrichtung 70 wird über einen Druckgasversorger 73 (siehe z.B. Figur 1) mit Druckgas 72 versorgt. Die Verbindung der einzelnen Komponenten wie Ausströmkörper 76, Ventil 75 und Druckgasversorger erfolgt über entsprechende Druckgasleitungen 74.

Die optoelektronische Sensoreinheit 51, insbesondere Kamera, der Sensoreinrichtung 50, detektiert die Präsenz eines auf der Einschleusvorrichtung 20 bzw. der Zufördereinrichtung 10 angeordneten und entsprechend dem Transferbereich TB zugeförderten Fördergutes 9.1, 9.2 sowie insbesondere auch mindestens eine Eigenschaft der detektierten Fördergüter 9.1, 9.2. Die Sensoreinrichtung 50 ist mit der Steuerungseinrichtung 2 verbunden.

Die Detektierung von empfindlichen Fördergütern 9.1 wurde bereits weiter oben beschrieben. Bei der Detektierung von empfindlichen Fördergütern 9.1, wie z. B. Beutelware, wird der Ausstoss von Druckgas 72 mittels der Steuerungseinrichtung 2 über das Ventil 75 zeitverzögert aktiviert.

Wird dahingegen das detektierte Fördergut 9.2, wie z. B. ein starres Paket, aufgrund der ebenfalls detektierten mindestens einen Eigenschaft als nicht problematisch eingestuft, so wird der Ausstoss von Druckgas 72 nicht aktiviert.

Die **Figur 3** zeigt eine ähnliche Anordnung wie die Figur 2 mit dem Unterschied, dass das Niveau der Förderflächen der Zufördereinrichtung 10 und der Förderschalen 31, d.h. das Niveau des Förderschalenbodens, gleich sind. Die Fördergüter 9.1 können entsprechend über eine horizontale Transferbewegung von der Zufördereinrichtung 10 den Förderschalen 31 des Übernahmeförderers 30 übergeben werden. Die jeweils der Zufördereinrichtung 10 zugewandte, schwenkbare Seitenwand 32 der Förderschalen 31 ist im Transferbereich TB herunter geschwenkt, so dass das Fördergut 9.1 nicht über die Seitenwand 32 hinweg transferiert werden muss.

Die Transferunterstützungseinrichtung 70 enthält wenigstens eine Druckgasdüse 71, welche dazu ausgelegt ist, Druckgas 72 von schräg unten mit einer Strömungskomponente in Transferrichtung T auszustossen. Dadurch wird zwischen der Förderschale 31 und einem sich über der Förderschale 31 bzw. der aufgeklappten Seitenwand 32 sowie dem Förderschalenboden angeordneten vorlaufenden Abschnitt eines zu transferierenden Förderguts 9.1 ein Gaspolster ausgebildet, welches die Gleitreibung herabsetzt. Dies verhindert, dass ein biegeschlaffes Fördergut 9.1 während des Transfers mit einem vorlaufenden Abschnitt auf der aufgeklappten Seitenwand 32 bzw. auf dem Förderschalenboden haften bleibt und durch den nachstossenden, nachlaufenden Abschnitt gestaucht wird.

Bezüglich der weiteren Merkmale in Figur 3, welche mit Merkmalen der Figur 2 identisch sind, wird auf die Beschreibung zu Figur 2 verwiesen.

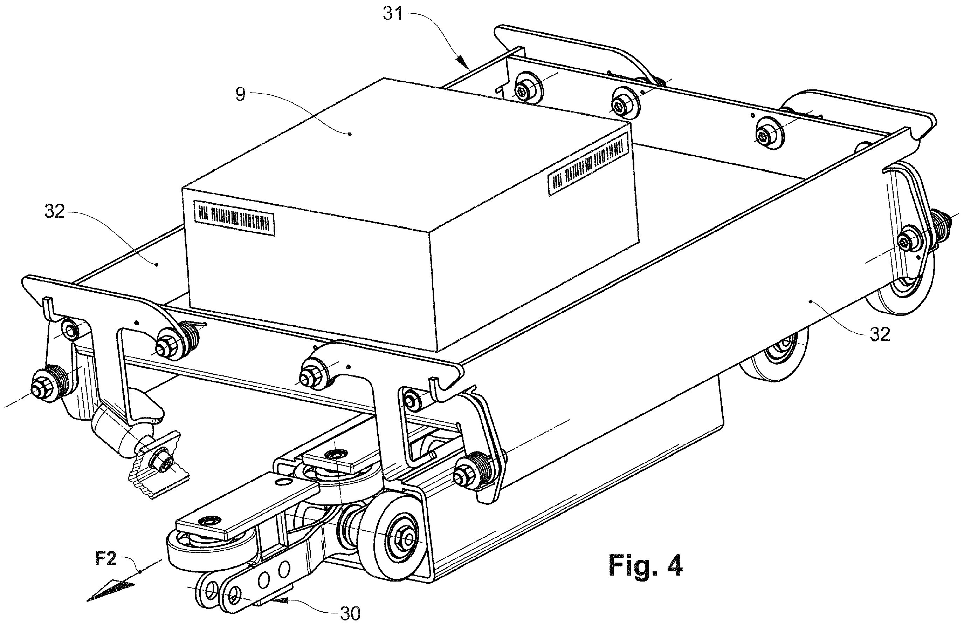

Die **Figur 4** zeigt beispielhaft eine Kippschale 31 einer als Kippschalenförderer ausgebildeten Übernahmefördereinrichtung 30. Die Kippschale 31 weist einen Schalenboden sowie diesen einfassende Seitenwände 32 auf. Seitenwände und Schalenboden bilden ein Aufnahmefach für ein Fördergut 9 aus. Die beiden in Förderrichtung F2 betrachtet seitlich angeordneten Seitenwände 32 sind schwenkbar ausgebildet und können zur Aufnahme bzw. zur Abgabe von Fördergütern 9 herunter geschwenkt bzw. geklappt werden. Zum Herunterschwenken der Seitenwände ist ein Auslösemechanismus vorgesehen.

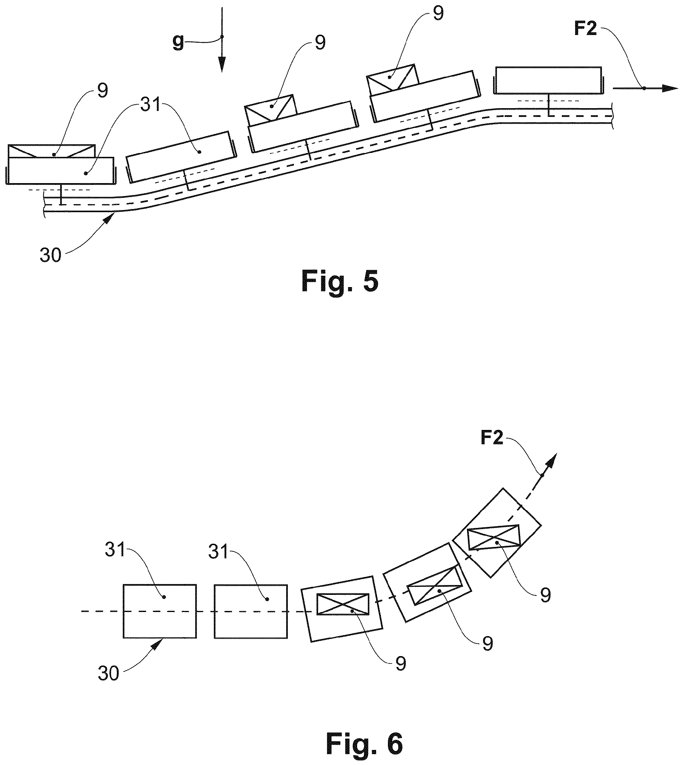

Die **Figuren 5** und **6** zeigen beispielhaft einen Kippschalenförderer 30 mit einer Mehrzahl von hintereinander angeordneten und miteinander verketteten Kippschalen 31. Die Kippschalen 31 können sowohl entlang einer Kurvenbahn als auch entlang von Steigungen geführt werden.

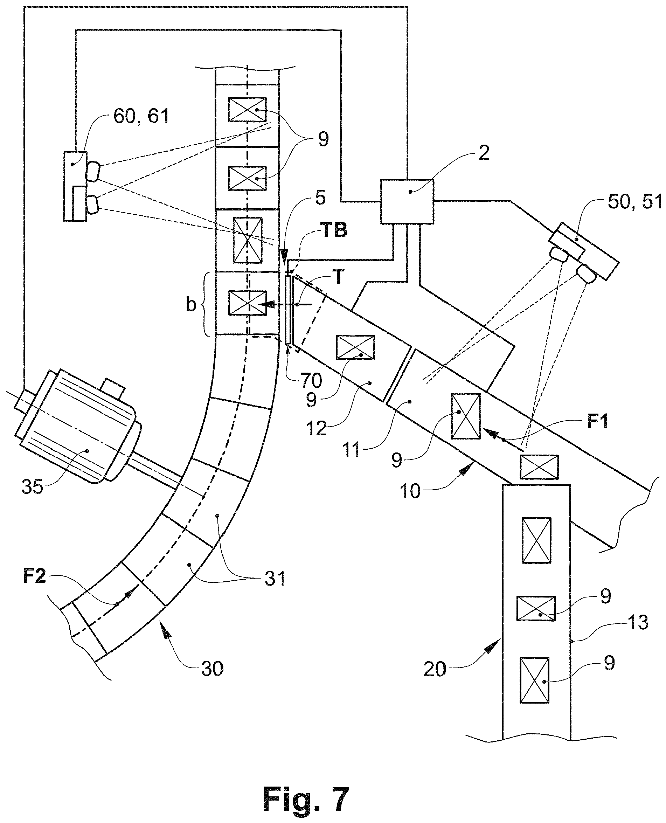

Die Figuren 7 bis 9 zeigen jeweils einen Ausschnitt einer erfindungsgemässen Förderanlage mit Fokus auf den Transferbereich TB gemäss verschiedenen Ausführungsformen. Merkmale, welche bereit im Zusammenhang mit der Figur 1 beschrieben wurden, werden an dieser Stelle nicht mehr gesondert beschrieben. Es wird vielmehr auf die Beschreibung zu Figur 1 verwiesen.

Gemäss der Ausführungsform nach **Figur 7** umfasst die Einschleusvorrichtung 20 die Zufördereinrichtung 10 mit einem Bandförderer 11 und einem abschliessenden Gurt- oder Riemenförderer 12 der bereits beschriebenen Art. Der Gurt- oder Riemenförderer 12 entspricht dem in Förderrichtung F1 letzten, vor der Übernahmefördereinrichtung 30 angeordneten Förderer. Ferner enthält die Einschleusvorrichtung 20 einen Bereitstellungsförderer 13, welcher die Fördergüter 9 der Zufördereinrichtung 10 zufördert. Im Übergang von der Zufördereinrichtung 10 zur Übernahmefördereinrichtung 30 wird ein Transferbereich TB ausgebildet, welcher gestrichelt dargestellt ist.

Die Zufördereinrichtung 10 fördert die Fördergüter 9 analog zur Ausführungsform nach Figur 1 in einem spitzen Winkel von der Seite der Übernahmefördereinrichtung 30 zu.

Im Transferbereich TB werden die Fördergüter 9 in Transferrichtung T von der Zufördereinrichtung 10 an die Übernahmefördereinrichtung 30 übergeben bzw. transferiert. Die Transferrichtung T entspricht in der vorliegenden Ausführungsform nicht der Förderrichtung F1 der Zufördereinrichtung 10, sondern verläuft vielmehr in einem rechten Winkel zur Förderrichtung F2 des Übernahmeförderers 30 im Transferbereich TB.

Der Transferbereich TB zeichnet sich dadurch aus, dass das Fördergut 9 mit einem vorlaufenden Abschnitt bereits über der Übernahmefördereinrichtung 30 und mit einem nachlaufenden Abschnitt noch über der Zufördereinrichtung 10 angeordnet ist. Der Transferbereich TB weist eine Breite b auf.

Der Antrieb der Zufördereinrichtung 10 wird über die Steuerungseinrichtung 2 gesteuert. Ebenso wird auch der Antrieb der Übernahmefördereinrichtung 30 über die Steuerungseinrichtung 2 gesteuert.

Die Förderanlage umfasst ferner eine Sensoreinrichtung 50 mit einer optoelektronischen Sensoreinheit 51, wie Kamera, zur Erfassung der Präsenz eines Fördergutes 9 auf der Einschleusvorrichtung 20 bzw. der Zufördereinrichtung 10 und insbesondere auch zur Erfassung mindestens einer Eigenschaft der Fördergüter 9, wie z. B. Grösse.

Ebenso umfasst die Förderanlage eine weitere Sensoreinrichtung 60 mit einer optoelektronischen Sensoreinheit 61, wie Kamera, zum Detektieren von fehlerhaften oder fehlplatzierten Fördergütern 9 auf dem Sortierförderer 30.

Beide Sensoreinrichtungen 50, 60 sind mit der Steuerungseinrichtung 2 verbunden.

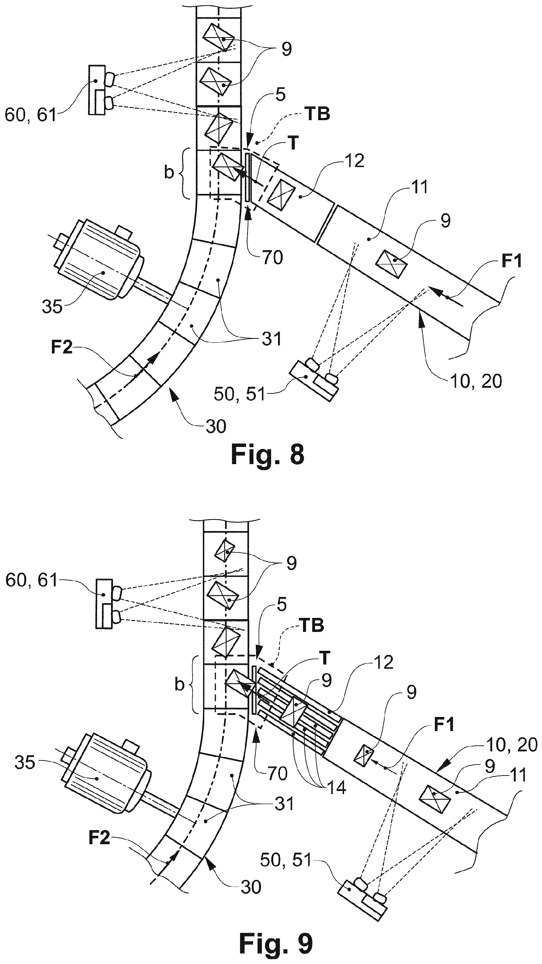

Die Ausführungsform nach **Figur 8** unterscheidet sich von der Ausführungsform nach Figur 7 unter anderem dadurch, dass die Transferrichtung T der Förderrichtung F1 der Zufördereinrichtung 10 entspricht. Entsprechend ist auch die Positionierung der Fördergüter 9 auf der ÜbernahmefÖrdereinrichtung 30 anders.

In der Ausführungsform nach **Figur 9** ist der Gurtförderer 12 der Zufördereinrichtung 10 zeichnerisch detaillierter dargestellt. Der Gurtförderer 10 enthält fünf parallel zueinander angeordnete und voneinander beabstandet, antreibbare Fördergurten 14. Der Einsatz eines Gurtförderers 12 erlaubt eine räumliche Abstufung der Fördergurten 14 bei einer Förderung der Fördergüter 9 in einem spitzen Winkel zur Übernahmefördereinrichtung 30. Dadurch ist die Förderlücke 5 über die gesamte Breite b des Transferbereichs TB bzw. der Förderbahn schmal ausgebildet.

Ferner erlaubt der Gurtförderer 12 auch den Antrieb der Fördergurten 14 mit unterschiedlichen Geschwindigkeiten. Dadurch lassen sich Richtungsänderungen der Fördergüter 9 auf dem Gurtförderer 12 vornehmen. So können die Fördergüter 9 mittels Fördergurten 14, die mit unterschiedlichen Geschwindigkeiten angetrieben werden, in eine von der Förderrichtung F1 der Zufördereinrichtung 10 abweichende Transferförderrichtung T lenken, wie sie beispielsweise in der Ausführungsform nach Figur 7 dargestellt ist.

Dieselben Eigenschaften treffen übrigens auch auf einen Riemenförderer zu.

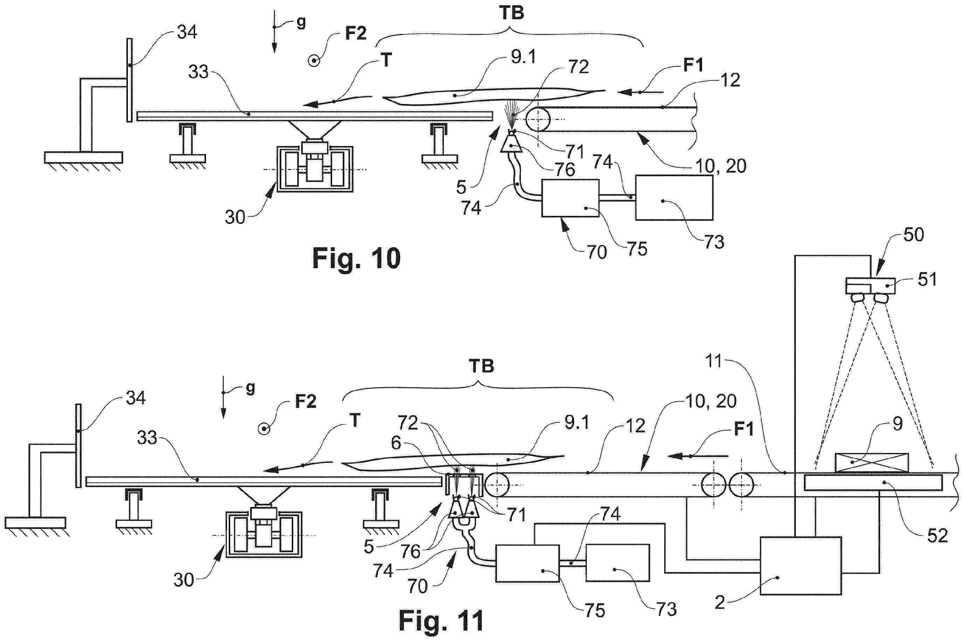

Die **Figur 10** zeigt eine ähnliche Anordnung wie die Figur 3 mit dem Unterschied, dass die Übernahmefördereinrichtung 30 anstelle von Förderschalen flache Förderplatten 33 enthält. Ferner wird das Druckgas 72 über die wenigstens eine Druckgasdüse 71 senkrecht von unten gegen das sich darüber vorbei bewegende Fördergut 9.1 im Transferbereich TB gerichtet.

Auch hier bewirkt das senkrecht von unten gegen das Fördergut 9.1 strömende Druckgas 72 für einen Auftrieb, was unter anderem zur Ausbildung eines Gaspolsters zwischen der Förder- bzw. Auflagefläche der Förderplatte 33 und einem vorlaufenden Abschnitt des Förderguts 9.1 führt.

Da die als flache Förderplatten 33 ausgebildeten Förderorgane der Übernahmefördereinrichtung 30 keine Seitenwände aufweisen, ist auf der der Zufördereinrichtung 10 gegenüberliegenden Seite der Förderplatte 33 ein Anschlag 34 vorgesehen, welcher verhindert, dass ein im Transferbereich TB mit zu viel Schwung auf die Förderplatte 33 gleitendes oder fliegendes Fördergut 9.1 auf der anderen Seite über die Förderplatte 33 hinausschiesst bzw. -gleitet.

Bezüglich der weiteren Merkmale in Figur 10, welche mit Merkmalen der Figuren 2 bzw. 3 identisch sind, wird auf die Beschreibung zu Figur 2 bzw. 3 verwiesen.

Die **Figur 11** zeigt eine ähnliche Anordnung wie die Figur 10 mit dem Unterschied, dass die Förderlücke 5 bzw. der Förderspalt mit einem Führungselement 6 überbrückt ist, welches eine Gleitfläche für das zu transferierende Fördergut 9 ausbildet. Das Führungselement 6 enthält mindestens eine Gasdurchströmöffnung, durch welche das unterhalb aus Druckgasdüsen 71 des Ausströmkörpers 76 ausströmende Druckgas 72 nach oben hindurchströmen kann.

Die Figur 11 zeigt ferner eine erweiterte Sensoreinrichtung 50, welche neben einer optoelektronischen Sensoreinheit 51, insbesondere Kamera, auch eine Waage bzw. ein Wägesystem 52 zum Wägen der dem Transferbereich zugeförderten Fördergüter 9 enthält. Die Waage bzw. das Wägesystem 52 wägt das Gewicht der auf der Einschleusvorrichtung 20 bzw. der Zufördereinrichtung 10 geförderten Fördergüter 9.

Die Sensoreinrichtung 50, das heisst sowohl die optoelektronische Sensoreinheit 51 als auch die Waage bzw. das Wägesystem 52 sind mit der Steuerungseinrichtung 2 verbunden. Ebenso ist die Transferunterstützungseinrichtung 70 bzw. deren Ventil 75 mit der Steuerungseinrichtung 2 verbunden.

So lässt sich mit der Sensorrichtung 50 neben der Grösse bzw. der Form des Fördergutes 9 auch dessen Gewicht erfassen. Aus den ermittelten Messdaten lassen sich vergleichsweise flache und gleichzeitig leichte Fördergüter 9 detektieren, welche im Hinblick auf den Transfer auf die Übernahmefördereinrichtung 30 zu den empfindlichen Fördergütern gehören.

Bezüglich der weiteren Merkmale in Figur 11, welche mit Merkmalen der Figuren 2, 3 bzw. 10 identisch sind, wird auf die Beschreibung zu Figur 2, 3 bzw. 10 verwiesen.

## Patentansprüche

1. Förderanlage (1) mit einer Zufördereinrichtung (10), einer Übernahmefördereinrichtung (30) und einer Steuerungseinrichtung (2) zum Übergeben von liegend geförderten Fördergütern (9) von der Zufördereinrichtung (10) an die Übernahmefördereinrichtung (30), wobei die Förderanlage (1) einen Transferbereich (TB) ausbildet, in welchem die Fördergüter (9) von der Zufördereinrichtung (10) an die ÜbernahmefÖrdereinrichtung (30) übergeben werden,
**dadurch gekennzeichnet, dass**
die Förderanlage (1) eine Transferunterstützungseinrichtung (70) enthält, welche dazu ausgelegt ist, im Transferbereich (TB) mittels Ausstoss von Druckgas (72) von unten auf mindestens ein vorbei bewegtes Fördergut (9) einzuwirken.

2. Förderanlage nach Anspruch 1, **dadurch gekennzeichnet, dass** die Transferunterstützungseinrichtung (70) mindestens eine Gasausströmöffnung (71) enthält, aus welcher Druckgas (72) von unten gegen das mindestens eine vorbei bewegte Fördergut (9) strömen kann.

3. Förderanlage nach Anspruch 1 oder 2, **dadurch gekennzeichnet, dass** zwischen der Zufördereinrichtung (10) und der Ubernahmefördereinrichtung (30) im Transferbereich (TB) eine Förderlücke (5) ausgebildet wird, und die Transferunterstützungseinrichtung (70) so ausgelegt ist, dass das Druckgas (72) von unten durch die Förderlücke (5) auf das mindestens eine, vorbei bewegte Fördergut (9) einwirkt.

4. Förderanlage nach einem der Ansprüche 1 bis 3, **dadurch gekennzeichnet, dass** die Steuerungseinrichtung (2) dazu ausgelegt ist, den Ausstoss von Druckgas (72) derart zu steuern, dass das mindestes eine Fördergut (9) zielgenau auf einen vorbestimmten Förderplatz der Übernahmefördereinrichtung (30) übergeben wird.

5. Förderanlage nach einem der Ansprüche 1 bis 4, **dadurch gekennzeichnet, dass** die Transferunterstützungseinrichtung (70) einen Ausströmkörper (76) umfasst, welcher die mindestens eine Gasausströmöffnung (71) ausbildet, und der Ausströmkörper (76) und insbesondere die mindestens eine Gasausströmöffnung (71) stationär angeordnet sind.

6. Förderanlage nach einem der Ansprüche 1 bis 5, **dadurch gekennzeichnet, dass** die Transferunterstützungseinrichtung (70), insbesondere für den gerichteten Ausstoss von Druckgas, mindestens eine Druckgasdüse (76) enthält, welche die mindestens eine Gasausströmöffnung (71) ausbildet.

7. Förderanlage nach einem der Ansprüche 1 bis 6, **dadurch gekennzeichnet, dass** die Transferunterstützungseinrichtung (70) so ausgelegt und angeordnet ist, dass das im Transferbereich (TB) von unten auf das mindestens eine Fördergut (9) einwirkende Druckgas (72) dem Fördergut (9) einen Auftrieb verleiht.

8. Förderanlage nach einem der Ansprüche 1 bis 7, **dadurch gekennzeichnet, dass** die Transferunterstützungseinrichtung (70) so ausgelegt und angeordnet ist, dass im Transferbereich (TB) zwischen einem Förderorgan (31) der Übernahmefördereinrichtung (30) und einem mit mindestens einem Abschnitt über der Förderfläche des Förderorgans (31) angeordneten Förderguts (9) ein Gaspolster ausgebildet wird.

9. Förderanlage nach einem der Ansprüche 1 bis 8, **dadurch gekennzeichnet, dass** die Förderanlage (1) eine Sensoreinrichtung (50) zum Detektieren der Präsenz eines dem Transferbereich (TB) zugeförderten Fördergutes (9) enthält.

10. Förderanlage nach einem der Ansprüche 1 bis 9, **dadurch gekennzeichnet, dass** die Förderanlage (1) eine Sensoreinrichtung (50) zum Detektieren von mindestens einer der folgenden Eigenschaften der dem Transferbereich (TB) zugeförderten Fördergüter (9) aufweist:
- Form des Fördergutes (9);
- Höhe des Fördergutes (9);
- Breite des Fördergutes (9):
- Grösse des Fördergutes (9);
- Gewicht des Fördergutes (9);
- Ausrichtung des Fördergutes (9);
- Beschaffenheit des Fördergutes (9).

11. Förderanlage nach Anspruch 10, **dadurch gekennzeichnet, dass** die Steuerungseinrichtung dazu ausgelegt ist, den Ausstoss von Druckgas (72) in Abhängigkeit von mindestens einer detektierten Eigenschaft derart zu steuern, dass das mindestes eine Fördergut (9) zielgenau auf einen vorbestimmten Förderplatz der Übernahmefördereinrichtung (30) übergeben wird.

12. Förderanlage nach einem der Ansprüche 1 bis 11, **dadurch gekennzeichnet, dass** die Übernahmefördereinrichtung (30) ein Schalenförderer mit einer Vielzahl von hintereinander entlang einer Förderbahn angeordnete Förderschalen (31) ist, und die Förderschalen (31) jeweils einen Förderplatz in Form eines Aufnahmefachs für ein Fördergut (9) ausbilden.

13. **Verfahren** zur Übergabe von Fördergütern (9) von einer Zufördereinrichtung (10) an eine Übernahmefördereinrichtung (30) mittels einer Förderanlage (1) nach einem der Ansprüche 1 bis 12,
**dadurch gekennzeichnet, dass**
mindestens ein Fördergut (9) im Transferbereich (TB) mittels der Transferunterstützungseinrichtung (70) von unten mit Druckgas (72) angeströmt wird.

14. Verfahren nach Anspruch 13, **dadurch gekennzeichnet, dass** der Ausstoss von Druckgas (72) mittels Steuerungseinrichtung (2) derart gesteuert wird, dass das mindestens eine Fördergut (9) zielgenau auf einen vorbestimmten Förderplatz der Übernahmefördereinrichtung (30) übergeben wird.

15. Verfahren nach einem der Ansprüche 13 bis 13, **dadurch gekennzeichnet, dass** das Druckgas im Transferbereich (TB) (72) durch die Förderlücke (5) von unten gegen das mindestens eine Fördergut (9) strömt.

16. Verfahren nach einem der Ansprüche 13 bis 14, **dadurch gekennzeichnet, dass** mittels der Sensoreinrichtung (50) die Präsenz eines dem Transferbereich (TB) zugeförderten Fördergutes (9) detektiert wird, und der Ausstoss von Druckgas (72) über die Steuerungseinrichtung (2) in Abhängigkeit von der Detektierung eines dem Transferbereich (TB) zugeförderten Fördergutes (9) gesteuert wird.

17. Verfahren nach einem der Ansprüche 13 bis 15, **dadurch gekennzeichnet, dass** mittels der Sensoreinrichtung (50) mindestens eine der folgenden Eigenschaften der dem Transferbereich (TB) zugeförderten Fördergüter (9) detektiert wird:
- Form des Fördergutes (9);
- Höhe des Fördergutes (9);
- Breite des Fördergutes (9):
- Grösse des Fördergutes (9);
- Gewicht des Fördergutes (9);
- Ausrichtung des Fördergutes (9);
- Beschaffenheit des Fördergutes (9),
und der Ausstoss von Druckgas (72) über die Steuerungseinrichtung (2) in Abhängigkeit von mindestens einer der detektierten Eigenschaften gesteuert wird.

18. Verfahren nach Anspruch 17, **dadurch gekennzeichnet, dass** der Ausstoss von Druckgas (72) mittels Steuerungseinrichtung (2) in Abhängigkeit von mindestens einer detektierten Eigenschaft derart gesteuert wird, dass das mindestes eine Fördergut (9) zielgenau auf einen vorbestimmten Förderplatz der Übernahmefördereinrichtung (30) übergeben wird.
